# FASCICULE DE BREVET EUROPEEN

(11) **EP 2 527 196 B1**
(45) Date de publication et mention de la délivrance du brevet: **12.03.2014**
(21) Numéro de dépôt: 12305556.8
(22) Date de dépôt: 21.05.2012
(51) Int. Cl.: B60N 2/46, B60N 2/66

(54) **Accessoire de montage d'accoudoir destiné à se monter sur un siège de véhicule automobile**
Zubehörteil für die Montage einer Armstütze an einem Sitz eines Kraftfahrzeugs
Accessory for mounting an armrest to be mounted on a motor vehicle seat

(30) Priorité: 24.05.2011 FR 1154495
(43) Date de publication de la demande: 28.11.2012
(73) Titulaire: Renault S.A.S., 92100 Boulogne-Billancourt (FR)
(72) Inventeur: Lesueur, Grégory, 78280 Montigny-le-Bretonneux (FR)

(56) Documents cités:
- DE-A1-102007 031 436
- FR-A1- 2 887 194
- JP-U- H0 329 051
- US-A- 6 053 064

## Description

La présente invention concerne un accessoire de montage d'accoudoir destiné à se monter sur un siège d'automobile.

Dans un certain nombre de gammes de véhicules automobiles, les sièges de premier rang ne sont généralement pas équipés d'accoudoir et il peut être souhaitable d'installer un accoudoir escamotable, (cf. notamment le document JP H 03 29051 U, correspondant au préambule de la revendication indépendante.

Cependant, du fait que les sièges de premier rang incorporent souvent une commande de réglage lombaire disposée sur une armature latérale du dossier de siège, par exemple comme divulgué dans le document FR 2 887 194, l'implantation d'un accoudoir pivotant escamotable n'est pas facile, d'autant qu'il faut aussi ne pas gêner le déploiement du coussin latéral gonflable de sécurité prévu dans le dossier de siège.

Le but de l'invention est de permettre l'implantation d'un accoudoir escamotable sur un dossier de siège pourvu d'une commande latérale de réglage lombaire.

L'invention atteint son but grâce à un accessoire de montage d'accoudoir pivotant pour dossier de siège comportant une armature latérale dotée d'un orifice de commande de réglage lombaire donnant accès à une commande de réglage lombaire disposée dans le siège, comprenant un manchon central extérieur de montage d'un accoudoir pivotant avec au moins une position de butée horizontale de l'accoudoir et une position de rangement sensiblement verticale, un organe de commande de réglage lombaire étant disposé sur le côté extérieur de l'accoudoir et relié à la commande de réglage lombaire en traversant l'intérieur du manchon central, caractérisé en ce que:
- il comprend une platine de fixation adaptée à se fixer sur l'armature du dossier de siège, la platine comprenant un manchon central extérieur doté sur sa surface extérieure de moyens de montage pivotant d'un accoudoir,
- un accoudoir se montant à pivotement sur ledit manchon central, avec au moins une position de butée horizontale de l'accoudoir et une position de rangement sensiblement verticale,
- une molette de commande de réglage lombaire disposée au bout d'un fût allongé adapté à se connecter à la commande de réglage lombaire présente à l'intérieur du siège, ledit fût étant adapté pour être disposé à l'intérieur du manchon central de la platine.

Ainsi l'invention permet de placer au même endroit, latéralement au siège, la commande de réglage lombaire et un accoudoir pivotant escamotable. Celui-ci peut être installé en première monte, mais plus avantageusement encore, il s'agit d'un accessoire qu'il est possible d'installer en deuxième monte à la demande du client, en service après-vente.

Dans un mode de réalisation avantageux, le manchon a une surface extérieure conique et une surface intérieure cylindrique. La surface extérieure conique réduit les jeux entre l'accoudoir et le manchon sur lequel il pivote. La surface intérieure cylindrique permet le guidage en rotation du fût allongé de la molette de commande.

L'accoudoir comprend avantageusement une partie de moyeu coopérant avec la surface extérieure du manchon, cette partie de moyeu comprenant des évidements destinés à réduire la surface de frottement sur le manchon et à diminuer ainsi les efforts nécessaires pour le pivotement de l'accoudoir.

L'accoudoir est monté de façon amovible sur le manchon, par exemple au moyen d'un dispositif de clipsage ou de blocage, tel qu'un ressort de blocage qui peut être retiré pour permettre le démontage.

Dans un mode de réalisation particulier, l'accoudoir et la platine comportent sur l'une ou l'autre de parties en regard un pion et une lumière courbe définissant la course de pivotement et les butées de l'accoudoir.

D'autres caractéristiques et avantages de l'invention ressortiront de la description suivante d'un exemple de réalisation. Il sera fait référence aux dessins annexés sur lesquels :
- la figure 1 est une vue en coupe schématique partielle horizontale d'un dossier de siège au niveau d'une commande latérale classique de réglage lombaire, sur laquelle le dispositif de l'invention peut s'installer en seconde monte.
- la figure 2 est une vue en coupe schématique partielle horizontale d'un dossier de siège au niveau de la commande latérale de réglage lombaire, sur laquelle le dispositif de l'invention a été installé en première ou en seconde monte.
- la figure 3 montre en perspective éclatée une partie du dispositif de l'invention, montrant notamment la platine et l'accoudoir.
- les figures 4 et 5 montrent en perspective respectivement la platine de l'invention et le détail du mécanisme de butée de l'accoudoir.
- les figures 6 et 7 montrent l'accoudoir en position escamotée, de rangement, et en position d'appui.

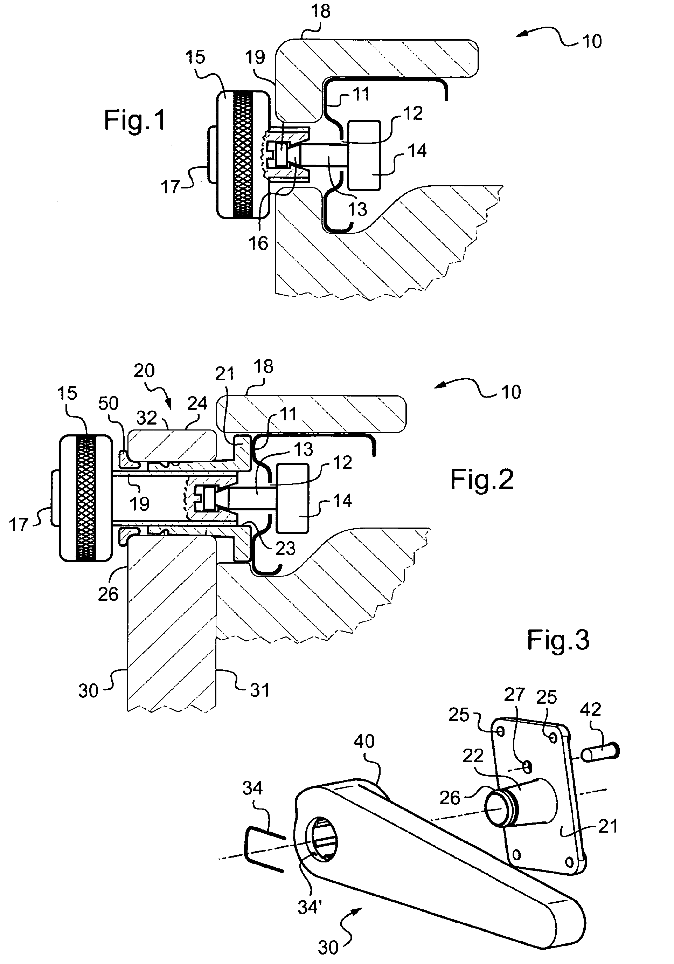

La figure 1 montre en coupe transversale un dossier de siège à commande latérale de réglage lombaire classique. Le dossier 10 comporte une armature latérale 11 sous forme de profilé métallique. Un trou 12 dans l'armature 11 laisse passer la tige 13 d'une commande 14 de réglage lombaire dont le mécanisme n'est pas détaillé. Sur l'extrémité de cette tige 13 qui dépasse hors de l'armature 11 vient se solidariser une molette 15 de commande lombaire, grâce à un mécanisme d'encliquetage 16 verrouillable par un verrou 17. De la mousse de rembourrage 18 entoure l'armature 11 et les faces avant et arrière du dossier 10.

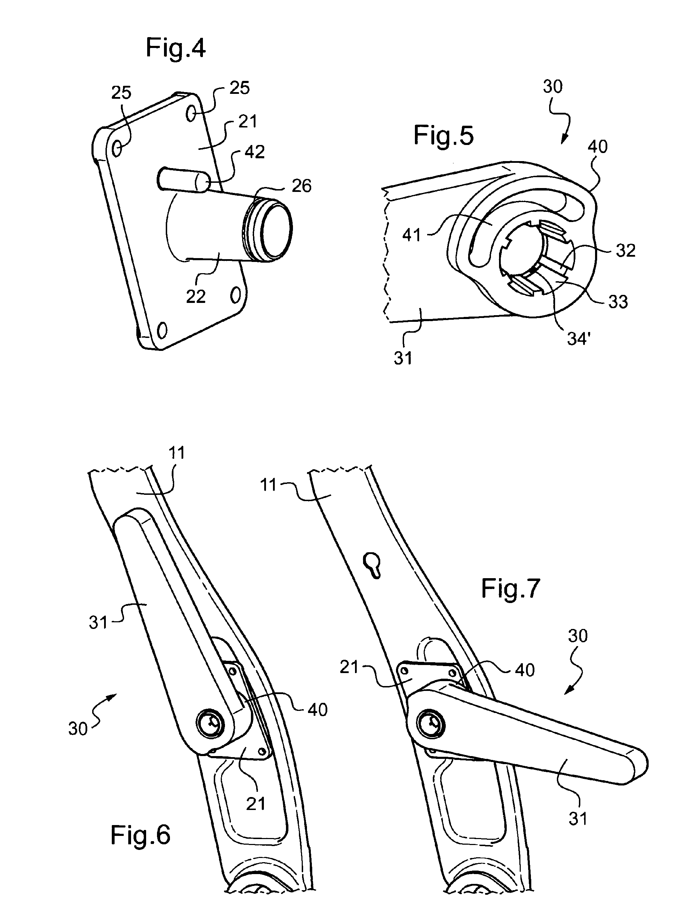

La figure 2 montre la même coupe après mise en place de l'accessoire 20 de l'invention, qui comprend essentiellement une platine 21 sous forme d'une plaque rectangulaire (cf. aussi figures 3 et 4) qui comporte en son centre un manchon creux 22 formant intérieurement un passage cylindrique 23 qui traverse la platine et extérieurement une surface de portée conique 24. La platine 21 est soudée sur l'armature 11 ou vissée par des vis passant par des orifices 25.

Sur le manchon 22 on vient emmancher de manière pivotante l'accoudoir 30 qui comporte un bras 31 partant d'une extrémité dans laquelle est formé un moyeu conique 32 coopérant avec la surface conique extérieure 24 du manchon 22. Pour diminuer le frottement, la surface intérieure du moyeu conique 32 peut comporter des évidements 33. Par ailleurs un ressort démontable 34 en fil en U carré peut être passé dans le moyeu 32 (par deux trous 34') pour coopérer avec la gorge extérieure 26 prévue à l'extrémité du manchon 22 et bloquer ainsi la position axiale du moyeu 32 sur le manchon 22.

Un mécanisme de butée est prévu pour définir l'angle de pivotement du levier entre sa position verticale de repos représentée en figure 6 et sa position horizontale d'appui représentée en figure 7. Ce mécanisme 40, représenté sur la figure 5 (mais non représenté sur la figure 2) comprend une lumière courbe 41 formée dans une épaisseur de matière entourant le moyeu 32, sur un arc d'environ 90°. Cette lumière reçoit, quand l'accoudoir est monté, un pion 42 introduit dans la platine 21 par un trou 27. Le pion 42 et la lumière courbe 41 permettent un pivotement d'un quart de tour du bras d'accoudoir, avec butée en bout de course du pion 42 contre le fond de la lumière 41.

Un enjoliveur 50 (figure 1) de plastique ou de métal peut être prévu au bord du passage interne du moyeu 32.

La mousse de rembourrage 18 peut être réarrangée autour de la platine 21.

Comme dans le mode de réalisation classique, on vient solidariser sur l'extrémité de tige 13 qui dépasse hors de l'armature 11 une molette 15 de commande lombaire, grâce à un mécanisme d'encliquetage 16 verrouillable par un verrou 17. Mais dans le présent mode de réalisation, la molette 15 est disposée au bout d'un fût 19 de plus grande longueur que dans la solution de l'état de la technique, puisqu'il doit traverser l'épaisseur de l'accoudoir 30 au niveau de son moyeu 32. Le diamètre extérieur du fût 19 est juste légèrement inférieur au diamètre interne du manchon 22 de manière à être guidé en rotation dans celui-ci, de sorte que la manoeuvre de la molette 15 pour commander le réglage lombaire est toujours possible, et ce, quelle que soit la position de l'accoudoir, en repos ou en appui.

Si l'accessoire de l'invention est placé en seconde monte à partir d'un siège conforme à la figure 1, la première étape consiste à retirer la molette de commande 15 classique, à fût court, et à dégager un peu la mousse 18 qui entoure le trou 12 pour pouvoir installer et fixer la platine 21.

## Revendications

1. Accessoire de montage (20) d'accoudoir (30) pivotant pour dossier de siège (10) comportant une armature latérale (11) dotée d'un orifice (12) de commande de réglage lombaire donnant accès à une commande (14) de réglage lombaire disposée dans le siège (10), comprenant un manchon central extérieur (22) de montage d'un accoudoir (30) pivotant avec au moins une position de butée horizontale de l'accoudoir (30) et une position de rangement sensiblement verticale, un organe (15) de commande de réglage lombaire étant disposé sur le côté extérieur de l'accoudoir et relié à la commande (14) de réglage lombaire en traversant l'intérieur du manchon central (22), **caractérisé en ce que** :
- il comprend une platine (21) de fixation adaptée à se fixer sur l'armature (11) du dossier de siège, la platine (21) comprenant ledit manchon central extérieur (22) doté sur sa surface extérieure (24) de moyens de montage pivotant dudit accoudoir (30),
- ledit accoudoir (30) se montant à pivotement sur ledit manchon central (22), avec au moins une position de butée horizontale de l'accoudoir (30) et une position de rangement sensiblement verticale,
- ledit organe de commande de réglage lombaire est une molette (15) disposée au bout d'un fût allongé (19) adapté à se connecter à la commande (14) de réglage lombaire présente à l'intérieur du siège, ledit fût (19) étant adapté pour être disposé à l'intérieur du manchon central (22) de la platine (21).

2. Accessoire selon la revendication 1, **caractérisé en ce que** le manchon (22) a une surface extérieure (24) conique et une surface intérieure (23) cylindrique.

3. Accessoire selon l'une quelconque des revendications 1 ou 2, **caractérisé en ce que** l'accoudoir (30) comprend une partie de moyeu (32) coopérant avec la surface extérieure (24) du manchon (22), cette partie de moyeu comprenant des évidements (33).

4. Accessoire selon l'une quelconque des revendications 1 à 3, **caractérisé en ce que** l'accoudoir (30) est monté de façon amovible sur le manchon (22).

5. Accessoire selon l'une quelconque des revendications 1 à 4, **caractérisé en ce que** l'accoudoir (30) et la platine (21) comportent sur des parties en regard un pion (42) et une lumière courbe (41) définissant la course de pivotement et les butées de l'accoudoir (30)

## Patentansprüche

1. Zubehörteil (20) für die Montage einer schwenkbaren Armstütze (30) für eine Rückenlehne (10), umfassend ein seitliches Ausrüstungsteil (11), das mit einer Lendenverstellungsbetätigungseinrichtungsöffnung (12) versehen ist, die Zugriff auf eine im Sitz (10) angeordnete Lendenverstellungsbetätigungseinrichtung (14) gibt, mit einer mittleren äußeren Manschette (22) für die Montage einer schwenkbaren Armstütze (30) mit mindestens einer horizontalen Anschlagposition der Armstütze (30) und einer im Wesentlichen vertikalen Verstauposition, wobei ein Lendenverstellungsbetätigungseinrichtungsorgan (15) an der Außenseite der Armstütze angeordnet ist und durch das Innere der mittleren Manschette (22) hindurchgehend mit der Lendenverstellungsbetätigungseinrichtung (14) verbunden ist, **dadurch gekennzeichnet, dass**
- es eine Befestigungsplatte (21) umfasst, die geeignet ist, am Ausrüstungsteil (11) der Rückenlehne befestigt zu werden, und die mittlere äußere Manschette (22) umfasst, die auf ihrer Außenfläche (24) mit Schwenkmontagemitteln der Armstütze (30) versehen ist,
- die Armstütze (30) schwenkbar an der mittleren Manschette (22) montiert werden kann, mit mindestens einer horizontalen Anschlagposition der Armstütze (30) und einer im Wesentlichen vertikalen Verstauposition,
- das Lendenverstellungsbetätigungseinrichtungsorgan ein Rad (15) ist, das am Ende einer länglichen Hülse (19) angeordnet ist, die geeignet ist, sich mit der im Inneren des Sitzes liegenden Lendenverstellungsbetätigungseinrichtung (14) zu verbinden, wobei die Hülse (19) geeignet ist, im Inneren der mittleren Manschette (22) der Platte (21) angeordnet zu sein.

2. Zubehörteil nach Anspruch 1, **dadurch gekennzeichnet, dass** die Manschette (22) eine konische Außenfläche (24) und eine zylindrische Innenfläche (23) hat.

3. Zubehörteil nach einem der Ansprüche 1 oder 2, **dadurch gekennzeichnet, dass** die Armstütze (30) einen Nabenteil (32) umfasst, der mit der Außenfläche (24) der Manschette (22) zusammenwirkt, wobei dieser Nabenteil Ausnehmungen (33) umfasst.

4. Zubehörteil nach einem der Ansprüche 1 bis 3, **dadurch gekennzeichnet, dass** die Armstütze (30) entfernbar an der Manschette (22) montiert ist.

5. Zubehörteil nach einem der Ansprüche 1 bis 4, **dadurch gekennzeichnet, dass** die Armstütze (30) und die Platte (21) an gegenüberliegenden Teilen einen Zapfen (42) und einen gekrümmten Schlitz (41) umfassen, der den Schwenkverlauf und die Anschläge der Armstütze (30) definiert.

## Claims

1. Accessory (20) for mounting a pivoting armrest (30) for a seatback (10) having a lateral reinforcement (11) provided with a lumbar adjustment control orifice (12) giving access to a lumbar adjustment control (14) arranged in the seat (10), comprising an outer central sleeve (22) for mounting a pivoting armrest (30) with at least one horizontal stop position for the armrest (30) and a substantially vertical storage position, a lumbar adjustment control member (15) being arranged on the outer side of the armrest and connected to the lumbar adjustment control (14) while passing through the interior of the central sleeve (22), **characterized in that**:
- it comprises a fixing plate (21) adapted to be fixed on the reinforcement (11) of the seatback, the plate (21) comprising the said outer central sleeve (22) provided on its outer surface (24) with means for pivotably mounting the said armrest (30),
- the said armrest (30) being pivotably mounted on the said central sleeve (22), with at least one horizontal stop position for the armrest (30) and a substantially vertical storage position,
- the said lumbar adjustment control member is a handwheel (15) arranged at the end of an elongate shaft (19) adapted to be connected to the lumbar adjustment control (14) present inside the seat, the said shaft (19) being adapted to be arranged inside the central sleeve (22) of the plate (21).

2. Accessory according to Claim 1, **characterized in that** the sleeve (22) has a conical outer surface (24) and a cylindrical inner surface (23).

3. Accessory according to either one of Claims 1 and 2, **characterized in that** the armrest (30) comprises a hub part (32) co-operating with the outer surface (24) of the sleeve (22), this hub part comprising cutouts (33).

4. Accessory according to any one of Claims 1 to 3, **characterized in that** the armrest (30) is mounted in a removable manner on the sleeve (22).

5. Accessory according to any one of Claims 1 to 4, **characterized in that** the armrest (30) and the plate (21) have on mutually opposite parts a pin (42) and a curved slot (41) defining the pivoting travel and the limit stops for the armrest (30).
